# FASCICULE DE BREVET EUROPEEN

(11) **EP 1 472 837 B1**
(45) Date de publication et mention de la délivrance du brevet: **13.07.2005**
(21) Numéro de dépôt: 03717370.5
(22) Date de dépôt: 03.02.2003
(51) Int. Cl.: H04L 12/56, H04Q 11/04, H04N 7/15

(54) **PROCEDE DE TRANSPORT DE FLUX MULTIMEDIA.**
VERFAHREN ZUR ÜBERTRAGUNG VON MULTIMEDIA-DATENSTRÖMEN
METHOD FOR MULTIMEDIA FLOW TRANSPORT

(30) Priorité: 05.02.2002 FR 0201333
(43) Date de publication de la demande: 03.11.2004
(73) Titulaire: FRANCE TELECOM, 75015 Paris (FR)
(72) Inventeur: DELESALLE, Christophe, F-22700 PERROS GUIREC (FR); STATIOTIS, Stéphane, F-22560 PLEUMEUR BODOU (FR); WIPLIEZ, Christian, Servel, 22300 LANNION (FR)
(74) Mandataire: Poulin, Gérard
(86) Numéro de dépôt international: PCT/FR2003/000321
(87) Numéro de publication internationale: WO 2003/067831

(56) Documents cités:
- WO-A-01/26301
- US-B1- 6 272 151
- MENGJOU LIN ET AL: "An experimental ATM-based video-on-demand system on a Macintosh platform" LOCAL COMPUTER NETWORKS, 1996., PROCEEDINGS 21ST IEEE CONFERENCE ON MINNEAPOLIS, MN, USA 13-16 OCT. 1996, LOS ALAMITOS, CA, USA,IEEE COMPUT. SOC, US, 13 octobre 1996 (1996-10-13), pages 59-68, XP010200673 ISBN: 0-8186-7617-5
- VEERARAGHAVAN M ET AL: "ATM SWITCH ROUTERS FOR COMBINED CONNECTION-ORIENTED AND CONNECTIONLESS TRANSPORT" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, vol. 3, 3 novembre 1997 (1997-11-03), pages 1481-1487, XP000737772 ISBN: 0-7803-4199-6

## Description

### DOMAINE TECHNIQUE

La présente invention se situe dans le domaine de transport de flux de données à travers un réseau d'échange de données et concerne plus particulièrement un procédé et un système de transport vers un même terminal d'au moins deux flux de données ayant des exigences en qualités de service (Qos) différentes.

### ETAT DE LA TECHNIQUE ANTERIEURE

Le mécanisme de transport et d'aiguillage des flux de données, tels que des flux IP repose sur le principe de routage.

Un routeur est une interface entre deux réseaux pouvant utiliser des protocole différents, destinée à faire passer des flux qui le traverse, de manière native IP ou encapsulés dans un autre protocole comme l'ATM (Asynchronous Transfer Mode) par exemple. Le routage est généralement basé sur l'analyse de l'entête des paquets à transporter.

Rappelons que pour effectuer le routage des paquets dans un réseau maillé, un noeud devrait connaître l'état de l'ensemble des autres noeuds avant de décider ou d'envoyer un paquet. Ceci est actuellement impossible à réaliser. Aussi, dans un premier temps, le routage s'appuie sur plusieurs composants parmi lesquels un commutateur de paquet et une table de routage. Un noeud de commutation est généralement formé de lignes de sortie qui émettent des trames obtenues à partir des paquets. Les paquets sont routés par le commutateur vers une ligne de sortie à partir de la table de routage.

Dans une technique connue, le routage peut être effectué de façon centralisé à partir d'un noeud central qui prend les décisions relatives à la définition d'une nouvelle table de routage et à son envoi vers les différentes stations du réseau. Ce noeud central reçoit les informations de la part de tous les composants du réseau et conçoit sa table de routage suivant des algorithmes déterminés à l'avance. Parmi les éléments qui peuvent être pris en considération pour établir cette nouvelle table de routage , citons :
- Le coût des liaisons ;
- le coût du passage dans un noeud ;
- le débit demandé ;
- le délai de transit demandé ;
- le nombre de noeuds à traverser ;
- la sécurité de transport de certaines classes de paquets ;
- l'occupation des mémoires des noeuds de commutation ;
- l'occupation des coupleurs de lignes.

Citons également le routage dit fixe dans lequel la table de routage ne varie pas dans le temps. Ce routage consiste à envoyer chaque paquet entrant dans le noeud dans la même direction correspondant généralement à l'algorithme de la route la plus courte.

Une technique plus élaborée consiste à envoyer des tables de routage d'une façon asynchrone.

Un autre principe connu, le MPLS (pour MultiProtocol Label Switching) permet de faire transiter des flux IP dans des directions différentes au moyen d'une sur-encapsulation des mêmes paquets. Ceci permet de faire une classification des flux pour les transporter sur des réseaux à qualités de service (QoS) différentes sans changer les principes des routeurs et les mécanismes de routage utilisés.

Il apparaît qu'avec les techniques décrites ci-dessus, il n'est pas possible de diriger des paquets IP ayant des qualités de services différentes dans un réseau d'équipements standards, à moins de diffuser les adresses de destinations de ces paquets, avec un protocole du type Protocol Index Multicast par exemple, dans lequel les adresses diffusées appartiennent à une famille d'adresses prédéterminées. Il en résulte que le routage n'est possible que pour des adresses connues à l'avance.

Ceci n'est pas compatible avec une transmission de données en mode Multicast vers une pluralité de terminaux.

Plus particulièrement, la diffusion des adresses n'est pas adaptée à la distribution de données ou de programmes audiovisuels à travers un réseau ouvert tel que le réseau Internet.

La demande de brevet français N° 99 12352, déposée par la demanderesse le 4 octobre 1999 décrit un protocole qui permet à un terminal appelant de réserver des ressources réseau avec qualité de service à travers un réseau non connecté pour établir une connexion à travers un réseau connecté avec un terminal appelé.

L'invention décrite dans cette demande est limitée aux protocoles de réservation de ressources GSMP (pour Generic Switch Management Protocol) et P1520 décrit dans l'article "IEEE, p-1520 Standards Initiative for Programmable Network Interface", IEEE communications Magazine, vol. 36, n° 10, pp. 64-70, octobre 1998, publié par J. BISWAS, AA. LAZAR, J.F. HUARD, K.S. LIM, S. MAHJOUB, L.F. PAU, M. SUZIKI, S. TORTENSSON, W. WANG et S. WEISTEIN. De ce fait, l'invention s'applique uniquement aux flux ATM portés sur un réseau ATM en mode connecté. Par ailleurs, le procédé décrit dans cette demande ne permet pas un multiplexage transparent de flux ayant des qualités de services différentes.

Le document US 6,272,151, déposé par CISCO Technology, décrit un système Video à la demande dans lequel une connection haut débit est crée, entre un utilisateur et le serveur de contenu afin de transporter de la vidéo avec une première qualité de service et des signaux de controle avec une deuxième qualité de service.

Le but de l'invention est de pallier les insuffisances de l'art antérieur décrit ci-dessus au moyen d'un procédé et d'un système permettant d'envoyer vers un même terminal des flux de données IP en provenance d'au moins deux équipements différents ayant des exigences de qualité de service différentes.

Un autre but de l'invention est de combiner un protocole d'un réseau connecté et un protocole d'un réseau non connecté pour transporter des données numériques en haut débit vers un même terminal client.

Un autre but de l'invention est de distribuer lesdites données à travers une ligne téléphonique en utilisant la technologie xDSL.

### EXPOSÉ DE L'INVENTION

L'invention propose donc un procédé de transport vers un même terminal client d'au moins un premier flux avec une première qualité de service et d'au moins un deuxième flux transmis avec une deuxième qualité de service audit terminal client par un serveur de contenu après réservation de ressource réseau avec qualité de service par échange de messages par l'intermédiaire d'un réseau non connecté.

Le procédé selon l'invention comporte en outre les étapes suivantes :
- établir une liaison haut débit entre le terminal client et le serveur de contenu ;
- multiplexer le premier et le deuxième flux dans un même flux ;
- transmettre le multiplex obtenu au terminal client à travers ladite liaison haut débit.

Selon l'invention, ladite liaison haut débit est de type xDSL.

Dans une application particulière du procédé selon l'invention, le deuxième flux représente des données audiovisuelles et le premier flux représente des signaux de contrôle du deuxième flux.

Selon un mode préféré de réalisation de l'invention, le réseau non connecté est le réseau Internet et le réseau connecté est un réseau ATM (pour Asynchronous Transfer Mode).

Dans ce cas, le procédé comporte en outre une étape consistant à envoyer au moins une commande externe au réseau ATM à partir d'une plate-forme de commande réseau pour établir la liaison haut débit entre le serveur de contenu et le terminal client. Le premier flux et le deuxième flux sont multiplexés dans un même flux et transmis au terminal client via la connexion haut débit établie.

Dans le mode préféré de réalisation, plusieurs terminaux requièrent des données audiovisuelles, dans la cadre d'une application VoD pour (Video On Demand) (Vidéo à la demande) par exemple, la transmission des flux audiovisuels vers un terminal client comporte les étapes suivantes :
- connecter le terminal client à une plate-forme de service via le réseau Internet pour requérir le contenu audiovisuel ;
- identifier le serveur du contenu audiovisuel ;
- réserver à travers une plate-forme de commande des ressources réseau avec la qualité de service prédéterminée entre le serveur audiovisuel et le terminal client ;
- activer une session Point à Point (PPP) (pour Point to Point Protocol) entre ledit serveur audiovisuel et le terminal client avec la qualité de service (QoS) établie précédemment ;
- diffuser ledit contenu audiovisuel avec les signaux de contrôle associés (lecture, pause, retour arrière, ...) vers le terminal client à travers le réseau ATM.

L'invention concerne également un système de transport vers un même terminal client d'au moins un premier flux avec une première qualité de service et d'au moins un deuxième flux transmis avec une deuxième qualité de service audit terminal client par un serveur de contenu après réservation de ressources réseau avec qualité de service par échange de messages par l'intermédiaire d'un réseau non connecté.

Le système selon l'invention comporte :
- des moyens pour établir une liaison haut débit entre le terminal client et le serveur de contenu ;
- des moyens pour multiplexer le premier et le deuxième flux dans un même flux ;
- des moyens pour transmettre le multiplex obtenu au terminal client à travers ladite liaison haut débit.

Dans un mode préféré de réalisation de l'invention, lesdits moyens pour établir une liaison haut débit entre le terminal client et le serveur.de contenu comportent un multiplexeur numérique du type DSLAM (pour Digital Subscriber Line Access Multiplexer) et au moins un commutateur ATM destiné à raccorder le terminal client au serveur de contenu.

Le système selon l'invention comporte en outre un premier serveur haut débit BAS (pour Broadbard Access Server) destiné à assurer une liaison haut débit via le réseau Internet entre le réseau ATM et un réseau de commande, et un deuxième serveur haut débit BAS destiné à assurer une liaison haut débit entre le terminal client et un serveur de données audiovisuelles.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente schématiquement un système transport de flux de données vers un terminal client selon l'invention à partir d'un serveur de contenu.
- La figure 2 représente schématiquement une répartition de serveurs de contenu par zone géographique.
- la figure 3 représente un schéma fonctionnel partiel d'un mode de réalisation préféré du procédé selon l'invention.

### EXPOSÉ DÉTAILLÉ DE MODES DE RÉALISATION PARTICULIERS

La description qui va suivre se rapporte à un exemple particulier d'application de l'invention consistant à combiner le protocole ATM (Asynchronous Transfer Mode) et le protocole IP (Internet Protocol) pour construire une application VoD (pour Vidéo On Demand) qui reçoit des requêtes de distribution de films envoyées par des terminaux client à travers le réseau Internet et qui retourne aux demandeurs les données audiovisuelles encapsulées dans un flux avec une qualité de service à travers un réseau ATM.

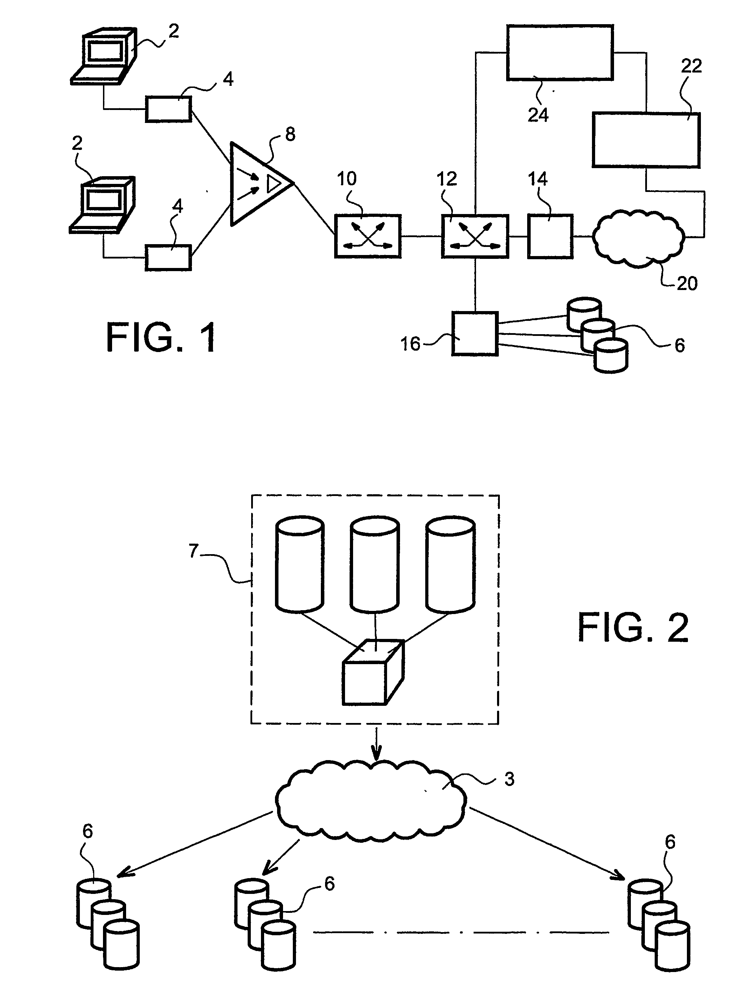

En référence à la figure 1, un terminal client 2 muni d'un modem 4 est susceptible d'être relié à travers le système selon l'invention à un serveur vidéo 6 parmi une pluralité de serveurs vidéo répartis géographiquement.

Comme illustré schématiquement par la figure 2, les programmes audiovisuels peuvent être stockés dans une base de données centrale 7 accessible aux différents serveurs de contenus via un réseau large bande 3.

Le système de la figure 1 comporte un multiplexeur numérique 8 du type DSLAM (pour Digital Subscriber Line Access Multiplexer) agencé entre le modem 4 et un premier commutateur ATM 10. Un deuxième commutateur ATM 12 est relié respectivement au premier commutateur ATM 10, à un premier serveur large bande 14 BAS (pour Broadband Access Server) et à un deuxième serveur large bande 16. Le premier serveur large bande 14 est relié via le réseau Internet 20 à une plate-forme de service 22 qui communique avec une plate-forme de commande 24 apte à envoyer des commandes réseau au premier commutateur ATM 10, au deuxième commutateur ATM 12, au premier serveur large bande 14 BAS (pour Broadband Access Server) et au deuxième serveur large bande 16.

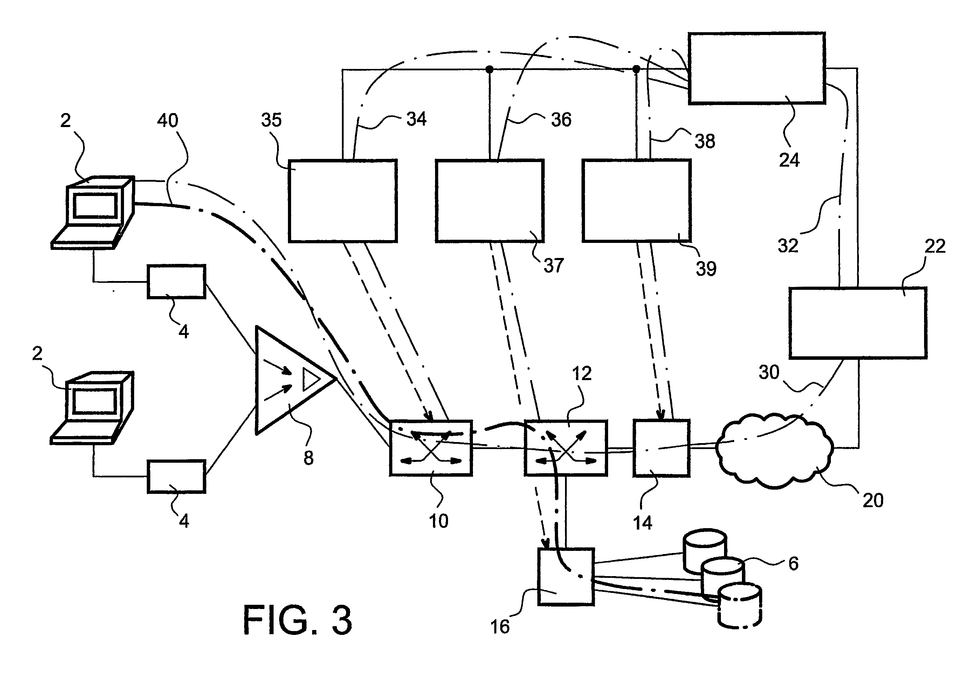

Le procédé de transport vers le terminal client 2 du flux audiovisuel avec qualité de service sera décrit par référence à la figure 3 dans laquelle les différentes étapes du procédé sont illustrées par des flèches reliant les différents équipements du système.

A l'étape 30, le demandeur d'un programme audiovisuel envoie une requête classique de connexion à la plate-forme de service 22 via le réseau Internet 20. Après authentification et localisation du client par la plate-forme de service 22 via la plate-forme de commande 24, la plate-forme de service 22 identifie le serveur vidéo 6 de proximité du client parmi les serveurs de contenus répartis 6.

Dans une variante de réalisation, si le contenu audiovisuel désiré par le client ne se trouve pas sur un serveur de proximité identifié, la plate-forme de commande 24 crée dynamiquement un lien haut débit entre la base de données 7 et le serveur de proximité 6 à travers le réseau large bande 3. A l'étape 32, la plate-forme de service 22 accède à la plate-forme de commande 24 qui envoie au premier commutateur ATM 10 (étape 34) des commandes externes (établissement/libération d'une connexion ATM) pour réserver les ressources réseau avec la qualité de service nécessaire au service demandé entre le terminal client 2 et le serveurs vidéo 6. La procédure de réservation des ressources réseau est décrite en détail dans la demande de brevet Français N° 99 12352, déposée par la demanderesse le 4 Octobre 1999.

A l'étape 36, la plate-forme de commande 24 active une session de service (PPP) entre le terminal client 2 et le premier serveur large bande 14 BAS dédié à la vidéo. Cette session (PPP) repose sur la connexion avec QoS établie à l'étape 34.

A l'étape 40, la plate-forme de service 22 lance l'application vidéo chez le client et commande la diffusion du flux de données audiovisuelles avec la qualité de service réservée.

Le canal vidéo avec QoS ainsi crée est utilisé, d'une part, pour transporter le flux multimédia vers le terminal client 2 à travers le multiplexeur numérique 8, et d'autre part, pour échanger avec le même terminal client 2 des signaux de contrôle du flux multimédia tels que des commande de lecture, de pause, d'avance rapide, de retour rapide et d'arrêt.

## Revendications

1. Procédé de transport vers un même terminal client (2) d'au moins un premier flux avec une première qualité de service et d'au moins un deuxième flux transmis avec une deuxième qualité de service audit terminal client (2) par un serveur de contenu (6) après réservation de ressource réseau avec qualité de service par échange de messages par l'intermédiaire d'un réseau non connecté, procédé **caractérisé en ce qu'**il comporte en outre les étapes suivantes :
- établir une liaison haut débit entre le terminal client (2) et le serveur de contenu (6) ;
- multiplexer le premier et le deuxième flux dans un même flux ;
- transmettre le multiplex obtenu au terminal client (2) à travers ladite liaison haut débit.

2. Procédé selon la revendication 1, **caractérisé en ce que** ladite liaison haut débit est de type xDSL.

3. Procédé selon la revendication 2, **caractérisé en ce que** le deuxième flux représente des données audiovisuelles et le premier flux représente des signaux de contrôle du deuxième flux.

4. Procédé selon l'une des revendications 2 et 3, **caractérisé en ce qu'**il comporte les étapes suivantes :
- connecter le terminal client (2) à une plate-forme de service (22) via le réseau Internet pour requérir le contenu audiovisuel :
- identifier le serveur du contenu (6);
- réserver à travers une plate-forme de commande (24) des ressources réseau avec une qualité de service prédéterminée entre le serveur de contenu (6) et le terminal client (2);
- activer une session Point à Point (PPP) (pour Point to Point Protocol) entre ledit serveur de contenu (6) et le terminal client (2) avec la qualité de service (QoS) établie précédemment ;
- diffuser ledit contenu avec les signaux de signalisation associés vers le terminal client (2) à travers un réseau ATM.

5. Système de transport vers un même terminal client (2) d'au moins un premier flux avec une première qualité de service et d'au moins un deuxième flux transmis avec une deuxième qualité de service audit terminal client (2) par un serveur de contenu (6) après réservation de ressource réseau avec qualité de service par échange de messages par l'intermédiaire d'un réseau non connecté, **caractérisé en ce qu'**il comporte :
- des moyens pour établir une liaison de haut débit entre le terminal client (2) et le serveur de contenu (6) ;
- des moyens pour multiplexer le premier et le deuxième flux dans un même flux ;
- des moyens pour transmettre le multiplex obtenu au terminal client (2) à travers ladite liaison haut débit.

6. Système selon la revendication 5, **caractérisé en ce que** ladite liaison haut débit est de type xDSL.

7. Système selon la revendication 6, **caractérisé en ce que** le deuxième flux représente des données audiovisuelles et le premier flux représente des signaux de contrôle du second flux.

8. Système selon l'une des revendications 5 à 7, **caractérisé en ce que** lesdits moyens pour établir une liaison xDSL entre le terminal client (2) et le serveur de contenu (6) comportent un multiplexeur numérique (8) du type DSLAM et au moins un premier commutateur ATM (10) destiné à raccorder le terminal client au serveur de contenu.

9. Système selon la revendication 8, **caractérisé en ce qu'**il comporte en outre un premier serveur haut débit BAS (14) destiné à assurer une liaison haut débit via le réseau Internet entre le réseau ATM et un réseau de commande, et un deuxième serveur haut débit BAS (16) destiné à assurer une liaison haut débit entre le terminal client (2) et un serveur des données audiovisuelles (6).

## Patentansprüche

1. Verfahren zur Übertragung mindestens eines ersten Datenflusses mit einer ersten Service-Qualität an ein Kunden-Endgerät (2), und mindestens eines zweiten Datenflusses, der mit einer zweiten Servicequalität durch einen Inhalts-Server (Content-Server)(6) nach einer Netz-Ressourcenreservierung mit einer Service-Qualität durch Nachrichtenaustausch über ein nicht-verbundenes Netz an das Kunden-Endgerät (2) übertragen wird, wobei das Verfahren **dadurch gekennzeichnet ist, dass** es außerdem die folgenden Schritte umfaßt:
- Herstellen einer Hochgeschwindigkeitsverbindung zwischen dem Kunden-Endgerät (2) und dem Inhalts-Server (6),
- Multiplexen des ersten und des zweiten Datenflusses zu einem einzigenDatenfluss,
- Übertragen des erhaltenen Multiplex an das Kunden-Endgerät (2) über die Hochgeschwindigkeitsverbindung.

2. Verfahren nach Anspruch 1, **dadurch gekennzeichnet, dass** die Hochgeschwindigkeitsverbindung vom xDSL-Typ ist.

3. Verfahren nach Anspruch 2, **dadurch gekennzeichnet, dass** der zweite Datenfluss audiovisuelle Daten darstellt und der erste Datenfluss Steuersignale des zweiten Datenflusses darstellt.

4. Verfahren nach einem der Ansprüche 2 oder 3, **dadurch gekennzeichnet, dass** es die folgenden Schritte umfaßt:
- Verbinden des Kunden-Endgeräts (2) mit einer Service-Plattform (22) über das Internet, um den audiovisuellen Inhalt abzurufen,
- Identifizieren des Inhalts-Servers(6),
- Reservieren der Netz-Ressourcen über eine Steuerplattform (24) mit einer vorbestimmten Service-Qualität zwischen dem Inhaltsserver (6) und dem Kunden-Endgerät (2),
- Aktivieren einer Punkt-zu-Punkt-Verbindung (PPP = Point to Point Protocol) zwischen dem Inhalts-Server (6) und dem Kunden-Endgerät (2) mit der vorher erstellten Service-Qualität (QoS),
- Senden des Inhalts mit den zugeordneten Signalisierungssignalen zu dem Kunden-Endgerät (2) über ein ATM-Netz.

5. System zur Übertragung mindestens eines ersten Datenflusses mit einer ersten Service-Qualität zu einem Kunden-Endgerät (2) und mindestens eines zweiten Datenflusses, der mit einer zweiten Servicequalität durch einen Inhalts-Server (6) nach einer Netz-Ressourcenreservierung mit Service-Qualität durch Nachrichtenaustausch über ein nicht-verbundenes Netz an das Kunden-Endgerät (2) übertragen wird, **dadurch gekennzeichnet, dass** es umfaßt:
- Mittel zum Herstellen einer Hochgeschwindigkeitsverbindung zwischen dem Kunden-Endgerät (2) und dem Inhalts-Server (6),
- Mittel zum Multiplexen des ersten und des zweiten Datenflusses zu einem Datenfluss,
- Mittel zum Übertragen des erhaltenen Multiplex an das Kunden-Endgerät (2) über die Hochgeschwindigkeitsverbindung.

6. System nach Anspruch 5, **dadurch gekennzeichnet, dass** die Hochgeschwindigkeitsverbindung vom xDSL-Typ ist.

7. System nach Anspruch 6, **dadurch gekennzeichnet, dass** der zweite Datenfluss audiovisuelle Daten darstellt und der erste Datenfluss Steuersignale des zweiten Datenflusses darstellt.

8. System nach einem der Ansprüche 5 bis 7, **dadurch gekennzeichnet, dass** die Mittel zum Herstellen einer xDSL-Verbindung zwischen dem Kunden-Endgerät (2) und dem Inhalts-Server (6) einen digitalen Multiplexer (8) vom DSLAM-Typ sowie mindestens einen ersten ATM-Schalter (10), der zum Verbinden des Kunden-Endgeräts mit dem Inhalts-Server vorgesehen ist, umfassen.

9. System nach Anspruch 8, **dadurch gekennzeichnet, dass** es außerdem einen ersten Hochgeschwindigkeitsserver BAS (14) umfaßt, der dazu vorgesehen ist, eine Hochgeschwindigkeitsverbindung über das Internet-Netz zwischen dem ATM-Netz und einem Steuernetz herzustellen, sowie einen zweiten Hochgeschwindigkeitsserver BAS (16), der dazu vorgesehen ist, eine Hochgeschwindigkeitsverbindung zwischen dem Kunden-Endgerät (2) und einem audiovisuellen Datenserver (6) herzustellen.

## Claims

1. Method for transferring to a same client terminal (2) at least one first flow with a first service quality and at least one second flow with a second service quality to said client terminal (2) by a content server (6) after network resource booking with service quality by exchanging messages via an unconnected network, **characterized in that** it further includes the following steps:
- establishing a high throughput link between the client terminal (2) and the content server (6);
- multiplexing the first and the second flows into a same flow;
- transmitting the multiplex obtained to the client terminal (2) through said high throughput link.

2. Method according to claim 1, **characterized in that** said high throughput link is of the xDSL type.

3. Method according to claim 2, **characterized in that** the second flow represents audiovisual data and the first flow represents signals for controlling the second flow.

4. Method according to either of the claims 2 and 3, **characterized in that** it includes the following steps:
- connecting the client terminal (2) to a service platform (22) via the Internet network for requesting the audiovisual content;
- identifying the content server (6);
- booking through a control platform (24), network resources with a predetermined service quality between the content server (6) and the client terminal (2);
- activating a point-to-point (PPP) (Point to Point Protocol) session between said content server (6) and the client terminal (2) with the service quality (QoS) established previously;
- broadcasting said contents with the associated signalling signals to the client terminal (2) through an ATM network.

5. System for transferring to a same client terminal (2) at least one first flow with a first service quality and at least one second flow with a second service quality to said client terminal (2) by a content server (6) after network resource booking with service quality by exchanging messages via the unconnected network, **characterized in that** it includes:
- means for establishing a high throughput link between the client terminal (2) and the content server (6);
- means for multiplexing the first and second flows into a same flow;
- means for transmitting the multiplex obtained to the client terminal (2) through said high throughput link.

6. System according to claim 5, **characterized in that** said high throughput link is of the xDSL type.

7. System according to claim 6, **characterized in that** the second flow represents audiovisual data and the first flow represents control signals for the second flow.

8. System according to one of the claims 5 to 7, **characterized in that** said means for establishing an xDSL link between the client terminal (2) and the content server (6) include a digital multiplexer (8) of the DSLAM type and at least a first ATM switch (10) for connecting the client terminal to the content server.

9. System according to claim 8, **characterized in that** it further includes a first high throughput BAS server (14) for providing a high throughput link via the Internet network between the ATM network and a control network, and a second high throughput BAS server (16) for providing a high throughput link between the client terminal (2) and a server of audiovisual data (6).
